# EUROPEAN PATENT APPLICATION

(11) **EP 1 571 851 A2**
(43) Date of publication of application: **07.09.2005**
(21) Application number: 05004197.9
(22) Date of filing: 25.02.2005
(51) Int. Cl.: H04N 7/46, H04N 7/34

(54) **Intra coding method**

(30) Priority: 02.03.2004 KR 2004013941
(71) Applicant: LG Electronics, Inc., Seoul (KR)
(72) Inventor: Lee, Jin Soo, Seoul (KR); Kim, Min Sub, Seoul (KR)
(74) Representative: Rupprecht, Kay

(57) **Abstract**

There is provided an intra coding method that can increase a coding processing speed. In YCbCr image, Cb image and Cr image that are insensitive to human eyes are reduced in size. That is, the Cb image and the Cr image are respectively divided into a plurality of first blocks. Using a sub-sampling, the first block is reduced to a second block. For example, the size of the second block may be reduced to half the size of the first block. The second block can consists of some of the pixels contained in the first block.

## Description

### BACKGROUND OF THE INVENTION

### Field of the Invention

The present invention relates to n image processing system, and more particularly, to an intra coding method capable of increasing a coding processing speed.

### Description of the Related Art

Moving picture coding methods including MPEG1, MPEG2 and MPEG3 are widely used in many fields. Handheld terminals, such as Personal Digital Assistant (PDA) and mobile terminal, demand a codec having high compression rate because of their limited memory capacity. To meet this demand, MPEG4 has been applied to the handheld terminal. MPEG4 has high compression rate with respect to picture quality.

Unlike the International Organization for Standardization (ISO) established to regulate MPEG standard, the International Telecommunication Union (ITU) proposed H.261, H.263 and then H.26L for communication standard. When H.26L and MPEG4 were tested jointly at the ISO and the ITU, H.26L had two times compression rate as high as MPEG4. Accordingly, the ISO and the ITU named H.26L as H.264 and adopted it as a joint standard. Specifically, the ISO named H.264 as MPEG4 Part 10.

Although H.264 has high compression rate, it requires fifteen times calculation in a video coding and five times in a video decoding, compared with MPEG4. Thus, there is a problem in putting in practice. Till now, many developers made attempts to reduce an amount of calculation of H.264. However, if an amount of calculation is reduced, the compression rate is also lowered as much and thus the inherent advantages of H.264 disappear.

Due to these problems, the coding part requiring a large amount of calculation has not been almost used in the handheld terminals, and the decoding part requires a small amount of calculation has been used in VOD service or the like. That is, the handheld terminal receives data already coded in a server, and displays a decoded image. As is well known, an amount of calculation is not very important in the decoding.

The moving picture coding standard such as H.264 or MPEG can be divided into an intra coding and an inter coding.

The intra coding performs a coding by using only a current frame, while the inter coding performs a coding by referring to neighboring frames. Although the inter coding has good compression rate compared with the intra coding, it has disadvantages in that picture quality is degraded when picture quality of the referred frame is bad or an error occurs. Accordingly, the inter coding performs a coding between important frames or regular frames.

Also, since frames having very large motion have less in common with neighboring frames, a compression effect is not great even through the inter coding. In this case, even the inter frame is coded in each block unit in the same manner as a block of the intra frame. Consequently, even when the frame is the inter frame, the divided blocks can be classified into the inter block and the intra block.

In recent years, the intra coding method has a good compression effect compared with JPEG and thus an attempt has been made to apply it to still picture coding.

### SUMMARY OF THE INVENTION

Accordingly, the present invention is directed to an intra coding method that substantially obviates one or more problems due to limitations and disadvantages of the related art.

An object of the present invention is to provide an intra coding method, in which a coding processing speed can be improved by remarkably reducing an amount of calculation and high compression rate can be maintained.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an intra coding method for coding an image composed of Y image, Cb image and Cr image includes the steps of: dividing the Cb image and the Cr image into a plurality of first blocks; reducing the plurality of first blocks to a second block by using a sub-sampling; selecting a mode estimated for the second block among a plurality of chroma prediction modes; and coding a difference between the second block and the selected mode.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a schematic view illustrating a general intra coding method of H.264;

Fig. 2 is an exemplary view of a brightness prediction mode used to estimate Y image in an intra coding;

Fig. 3 is an exemplary view of a chroma prediction mode used to estimate Cb image and Cr image in an intra coding;

Fig. 4 is an exemplary view illustrating a 8×8 block of Cb image and Cr image;

Figs. 5A to 5D are exemplary views of Cb image and Cr image, in which 8×8 block of the Cb image and the Cr image is reduced to 4×4 block in an intra coding according to the present invention;

Fig. 6 is a view illustrating a codeword conversion defined in coding a general estimation mode; and

Fig. 7 is a view illustrating a codeword conversion defined in coding a color estimation mode in an intra coding according to a preferred embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

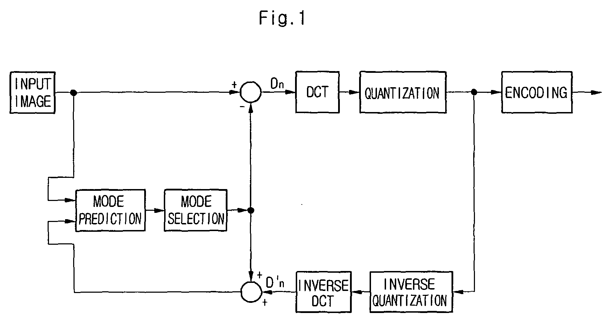

Fig. 1 is a schematic view illustrating a general intra coding method of H.264.

Referring to Fig. 1, an input image is divided in block unit by a pre-processing procedure. If the input image is RGB image, the RGB image is converted into YCbCr image by a color space conversion. That is, for the intra coding, the image must be converted into YCbCr image.

The YCbCr image is rearranged to Y image, Cb image and Cr image. The intra coding is independently performed to Y, Cb and Cr images. The Y image represents a brightness color image, and the Cb and Cr images represent a chrominance image.

That is, after one frame image is rearranged to the Y image, the Cb image and the Cr image, the Y, Cb and Cr images are respectively divided into a plurality of blocks and then the coding is performed on the divided block units.

As described above, in the intra coding, the frame is divided into a plurality of blocks. For example, the Y image is divided into 4×4 block units, and the Cb image and the Cr image are respectively divided into 8×8 block units.

In four pixels consisting of two pixels in a horizontal direction and two pixels in a vertical direction, Y value (brightness component) exists in each pixel, while Cb and Cr values (chrominance components) exists one of the four pixels.

First, the Y image is divided into a plurality of 4×4 block units and inputted in sequence.

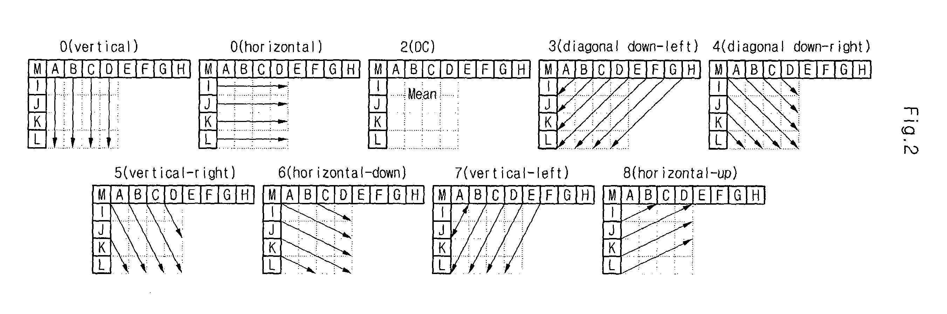

A mode prediction for a first block is performed. At this point, as shown in Fig. 2, nine modes can be used as a brightness prediction mode. That is, the brightness prediction mode includes a vertical mode, a horizontal mode, a mean mode, a diagonal down-left mode, a diagonal down-right mode, a vertical-right mode, a horizontal-down mode, a vertical-left mode, a horizontal-up mode.

For the first block, a previous block does not exist. Thus, an encoding is achieved only through a Discrete Cosine Transform (DCT) and a quantization, without performing the mode prediction. The encoding can be performed using Variable Length Coding (VLC) or Context-Adaptive Arithmetic Coding (CABAC). Since the VLC and the CABAC are well known, a detailed description thereof will be omitted.

The quantized first block is decoded through an inverse quantization and an inverse DCT (IDCT).

If a second block is inputted, a difference value between the first block and the second block is calculated using the nine brightness prediction modes. Accordingly, difference values are calculated with respect to the nine brightness prediction modes.

For example, in the case of the horizontal mode, difference values between the previous block (that is, rightmost four pixels of the first block) and each horizontal-mode pixel disposed at rows corresponding to the pixels are calculated. Through these processes, difference values with respect to the nine brightness prediction modes are respectively calculated.

Among the nine brightness prediction modes, a brightness prediction mode having the smallest mean value of each difference value of 4×4 block is selected.

Accordingly, the difference values between the second block and the selected brightness prediction mode are calculated and are then encoded through the DCT and the quantization.

Likewise, the remaining blocks contained in the Y image can also be encoded through the above-described processes.

When the encoding of the Y image is finished, the encoding of the Cb image and the Cr image is performed through the above-described processes.

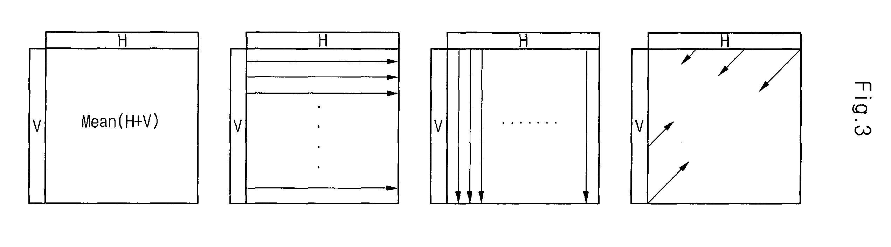

As shown in Fig. 3, in the case of the Cb image and the Cr image, four modes can be used as the chroma prediction mode. That is, the chroma prediction mode includes a mean mode, a horizontal mode, a vertical mode, and a bi-directional mode.

Unlike the Y image, the Cb image and the Cr image are respectively divided into 8×8 block units. The reason is that human eyes are less sensitive to the chrominance component than the brightness component. Accordingly, even though the Cb image and the Cr image are coded in large block units compared with the Y image, human eyes cannot almost sense that.

In the intra coding of H.264, it is the mode prediction process that actually increases an amount of calculation.

In this embodiment, while the 4×4 block unit of the Y image sensitive to human eyes is left as it is, and the 8×8 blocks of the Cb image and the Cr image insensitive to human eyes are reduced to smaller block units by using a sub-sampling, thereby decreasing an amount of calculation in the mode prediction. Consequently, the coding processing speed can be increased remarkably.

According to the related art intra coding, in case of the Cb image and the Cr image, the prediction process is performed to select one of the four prediction modes according to four directions with respect to 8×8 blocks. For this prediction process, following operations for the Cb image of one block are required.

Number of times of addition and subtraction: sixty-four times (number of pixels per 8×8 block) × 4 times (four modes)

Number of times of comparison: four times (process of finding mode having the smallest difference value)

Number of times of memory access: 64 × 2 (read) + 64 (write)

Of course, in the case of the Cr image of one block, the same number of times of calculation is required. Accordingly, if the prediction is performed on a lot of blocks existing in one frame, a very large amount of calculation is required, resulting in degradation of the coding processing speed.

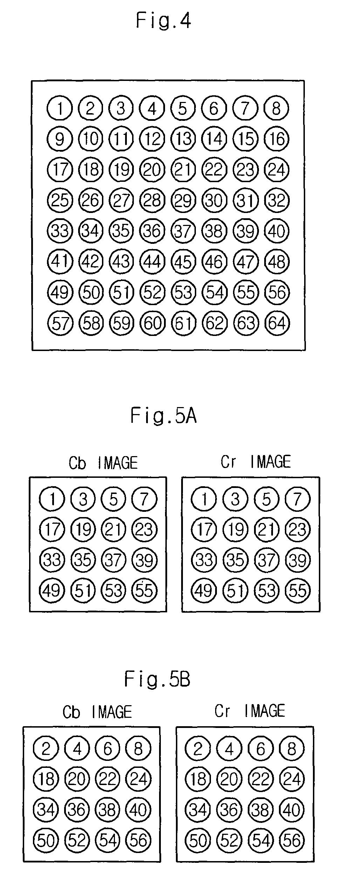

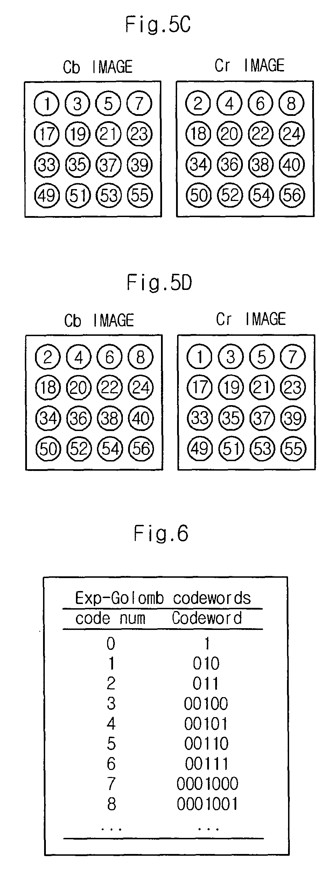

In order to overcome these problems, the divided 8×8 blocks for the Cb image and the Cr image are reduced to 4×4 block by using a sub-sampling. This will be described in detail with reference to Figs. 4 and 5.

For example, it is assumed that the 8×8 block is given as shown in Fig. 4. Here, the numbers represent pixels.

As shown in Fig. 5A, using the sub-sampling, the 8×8 block of the Cb image can be reduced to 4×4 block that consists of pixels 1, 3, 5, 17, 19, 21, 23, 33, 35, 37, 39, 49, 51, 53 and 55. Likewise, the 8×8 block of the Cr image can be reduced to 4×4 blocks, each of which consists of pixels 1, 3, 5, 17, 19, 21, 23, 33, 35, 37, 39, 49, 51, 53 and 55.

That is, the 4×4 blocks of the Cb image and the Cr image can consist of the pixels disposed at intersections of the odd rows and the odd columns in the 8×8 block.

Also, as shown in Fig. 5B, using the sub-sampling, the 8×8 block of the Cb image can be reduced to 4×4 block that consists of pixels 2, 4, 6, 8, 18, 20, 22, 24, 34, 36, 38, 40, 50, 52, 54 and 56. Likewise, the 8×8 block of the Cr image can be reduced to 4×4 block that consists of pixels 2, 4, 6, 8, 18, 20, 22, 24, 34, 36, 38, 40, 50, 52, 54 and 56.

That is, the 4×4 blocks of the Cb image and the Cr image can consist of the pixels disposed at intersections of the even rows and the odd columns in the 8×8 block.

As shown in Fig. 5C, using the sub-sampling, the 8×8 block of the Cb image can be reduced to 4×4 block that consists of the pixels disposed at intersections of the odd rows and the odd columns, and the 8×8 block of the Cr image can be reduced to 4×4 block that consists of the pixels disposed at intersections of the even rows and the odd columns in the 8×8 block.

As shown in Fig. 5D, using the sub-sampling, the 8×8 block of the Cb image can be reduced to 4×4 block that consists of the pixels disposed at intersections of the even rows and the odd columns in the 8×8 block, and the 8×8 block of the Cr image can be reduced to 4×4 block that consists of the pixels disposed at intersections of the odd rows and the odd columns in the 8×8 block.

By reducing the 8×8 blocks of the Cb image and the Cr image to the 4×4 blocks through the sub-sampling, an amount of calculation is remarkably reduced in the chroma prediction mode as follows:

Number of times of addition and subtraction: sixteen times (number of pixels per 4×4 block) × 4 times (four modes)

Number of times of comparison: four times (process of finding mode having the smallest difference value)

Number of times of memory access: 16 × 2 (read) + 16 (write)

Compared with the Y image, the Cb image and the Cr image are insensitive in the picture quality and the reliability of the sub-sampling is improved since the block size (8×8) is larger. Thus, even though the block is reduced to the 4×4 block through the sub-sampling, the picture quality is not influenced.

One chroma prediction is selected by performing the chroma prediction mode on the Cb image and the Cr image by the reduced 4×4 block unit.

The difference value between the selected chroma prediction mode and the reduced 4×4 block is calculated and the encoding is then performed through the DCT and the quantization.

Since the coding is performed by the 4×4 block unit instead of the 8×8 block unit, it is possible to obtain fast coding processing speed.

A following Table 1 shows the comparison of the encoded information amount when the Cb image and the Cr image are coded by the 8×8 block unit and the 4×4 block unit.

**[Table 1]**

| | Encoded Information Amount | |
|---|---|---|
| | QCIF | VGA |
| Related Art Coding (8×8 block) | 2.15 Kbyte | 27.79 Kbyte |
| Inventive Coding (Fig. 5A) | 2.16 Kbyte | 27.88 Kbyte |
| Inventive Coding (Fig. 5C) | 2.15 Kbyte | 27.85 Kbyte |

It can be seen from Table 1 that the related art coding and the inventive coding for the Cb image and the Cr image are almost similar to each other.

Accordingly, compared with the related art, the present invention can greatly increase the coding processing speed with the similar compression rate.

As described above, there are nine brightness prediction modes of the Y image. At this point, code numbers are assigned to the respective modes depending on the use frequency. For example, when the vertical mode among the brightness prediction modes is used most frequently, a code number "0" is assigned to the vertical mode. Likewise, the code numbers can be assigned to the remaining modes. The code numbers 1 to 9 can be assigned to the nine modes.

As shown in Fig. 6, the code numbers are converted into codewords in the encoding according to a predetermined regulation (Exp-Golomb codewords).

For example, the code number "0" is converted into a 1-bit codeword "1", and the code number "3" is converted into a 5-bit codeword "00100".

The Exp-Golomb codewords of Fig. 6 is applied to the Cb image and the Cr image as well as the Y image.

Therefore, there occurs a problem in that an unnecessary bit is assigned in the encoding of the chroma prediction mode using only four modes.

According to the present invention, in the encoding of the chroma prediction mode for the Cb image and the Cr image, it can be defined to reduce to four codewords having a reduced bit gain bit according the use frequency of the four chroma prediction modes.

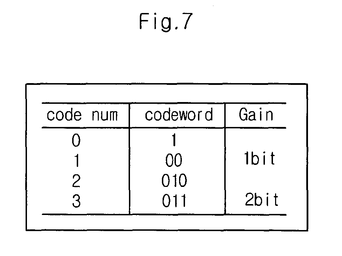

For example, as shown in Fig. 7, when the code number "0" is assigned to the chroma prediction mode used most frequently, it can be converted into a 1-bit codeword "1". Next, the code number "1" can be converted into a 2-bit codeword "00". Likewise, the code number "2" can be converted into a 3-bit codeword "010", and the code number "3" can be converted into a 3-bit codeword "011".

The conversion relationship between the code number and the codeword is merely exemplary and other examples can be further provided. Such an example can come within the scope of the present invention.

Referring to Fig. 7, the code number "1" can obtain gain of 1 bit, and the code number "3" can obtain gain of 2 bits. Thus, the bit number can be reduced to maximum 2 bits by the newly defined codeword, thereby achieving the encoding more efficiently.

According to the present invention, the block unit of the Cb image and the Cr image are reduced using the sub-sampling and the mode prediction is performed. In this manner, an amount of calculation in the mode prediction is remarkably reduced, thereby increasing the coding processing speed while maintaining the compression rate. Thus, the application fields using H.264 can be expanded.

Also, the codewords for encoding the chroma prediction mode is newly defined to reduce the bit number, thereby achieving the efficient encoding.

Specifically, in the case of the handheld terminal in which the capacity of battery is limited, the battery consumption can be reduced and the coding time can be shortened through the inventive intra coding method.

It will be apparent to those skilled in the art that various modifications and variations can be made in the present invention. Thus, it is intended that the present invention covers the modifications and variations of this invention provided they come within the scope of the appended claims and their equivalents.

## Claims

1. An intra coding method for coding an image composed of Y image, Cb image and Cr image, the intra coding method comprising the steps of:
dividing the Cb image and the Cr image into a plurality of first blocks;
reducing the plurality of first blocks to a second block by using a sub-sampling;
selecting a mode estimated for the second block among a plurality of chroma prediction modes; and
coding a difference between the second block and the selected mode.

2. The intra coding method according to claim 1, wherein size of the second block is reduced to half size of the first block by the sub-sampling.

3. The intra coding method according to claim 1, wherein in the case of the Cb image and the Cr image, the second block consists of pixels disposed at intersections of odd rows and odd columns in the first block.

4. The intra coding method according to claim 1, wherein in the case of the Cb image and the Cr image, the second block consists of pixels disposed at intersections of even rows and odd columns in the first block.

5. The intra coding method according to claim 1, wherein in the case of the Cb image, the second block consists of pixels disposed at intersections of odd rows and odd columns in the first block, and
in the case of the Cr image, the second block consists of pixels disposed at intersections of even rows and odd columns in the first block.

6. The intra coding method according to claim 1, wherein in the case of the Cb image, the second block consists of pixels disposed at intersections of even rows and odd columns in the first block, and
in the case of the Cr image, the second block consists of pixels disposed at intersections of odd rows and odd columns in the first block.

7. The intra coding method according to claim 1, wherein different codewords are assigned depending on use frequency of the chroma prediction modes so as to efficiently coding the plurality of chroma prediction modes.

8. The intra coding method according to claim 7, wherein when the chroma prediction modes have first to fourth modes, a 1-bit codeword is assigned to the first mode having highest use frequency, a 2-bit codeword is assigned to a second mode having second highest use frequency, and a 3-bit codeword is assigned to the third and fourth modes having less higher use frequency.

9. The intra coding method according to claim 8, wherein 1 is assigned to the first mode, 00 is assigned to the second mode, 010 is assigned to the third mode, and 011 is assigned to the fourth mode.
